# EUROPÄISCHE PATENTANMELDUNG

(11) **EP 0 542 124 A1**
(43) Veröffentlichungstag der Anmeldung: **19.05.1993**
(21) Anmeldenummer: 92118928.8
(22) Anmeldetag: 05.11.1992
(51) Int. Cl.: F01N 1/08, F01N 7/16

(54) **Schalldämpfer**

(30) Priorität: 12.11.1991 DE 4137104
(71) Anmelder: Schwäbische Hüttenwerke GmbH, D-73414 Aalen (DE)
(72) Erfinder: Härle, Hans A., Dipl.-Ing., W-7085 Bopfingen (DE)
(74) Vertreter: Lorenz, Werner, Dipl.-Ing.

(57) **Zusammenfassung**

Ein Schalldämpfer für die Abgase eines Verbrennungsmotores ist mit wenigstens einem in einem Gehäuse (1) angeordneten Schalldämmrohr (19) versehen, durch dessen Umfangswand das Abgas strömt. Das Schalldämmrohr (19) ist aus versintertem Gewebe, Gestrick oder Gewirr von Metalldrähten, Metallfasern, Metallspänen, Metallpulver oder Mischungen daraus gebildet.

## Beschreibung

Die Erfindung betrifft einen Schalldämpfer für die Abgase eines Verbrennungsmotores mit wenigstens einem in einem Gehäuse angeordneten Schalldämmrohr, durch dessen Umfangswand die Abgase strömen und ein Verfahren zur Herstellung eines derartigen Schalldämpfers.

Als Schalldämpfer werden im allgemeinen sogenannte Reflektions- oder Absorptions-Schalldämpfer eingesetzt, die in das Abgasrohrsystem des Verbrennungsmotores eingebaut sind.

Nachteilig bei den bekannten Schalldämpfern ist jedoch, daß sie in der Herstellung relativ teuer und in der schalldämmenden Wirkung schlecht sind. Weiterhin ist deren Lebensdauer begrenzt.

Um eine Schalldämmwirkung zu erzielen werden im allgemeinen mehrere Rohre in einem Gehäuse durch Kammern voneinander getrennt angeordnet, wobei die Rohre jeweils an ihren Umfangswänden von außen nach innen oder von innen nach außen durchströmt werden, wobei die Weiterleitung jeweils durch eine offene Stirnseite erfolgt. Die Rohre sind als sogenannte Lochrohre mit einer Vielzahl von Löchern in den Umfangswänden ausgebildet. Um eine Schalldämmwirkung zu erzielen, werden die Lochrohre mit metallischen Drahtfasern umwickelt. Ebenso ist es auch bereits bekannt, die Lochrohre vollständig in ein kompaktes Schalldämmaterial einzubetten, das den Schalldämpfertopf bzw. das Schalldämpfergehäuse ganz oder teilweise ausfüllt.

Neben einer begrenzten Wirksamkeit sind die bekannten Formen - wie erwähnt - relativ aufwendig und teuer.

Der vorliegenden Erfindung liegt daher die Aufgabe zugrunde, einen Schalldämpfer der eingangs erwähnten Art zu schaffen, der die vorstehend beschriebenen Nachteile nicht besitzt, insbesondere der bei einfachem Aufbau relativ kostengünstig ist und trotzdem eine gute Schalldämmwirkung besitzt.

Erfindungsgemäß wird diese Aufgabe dadurch gelöst, daß das Schalldämmrohr aus einem versinterten Gewebe, Gestrick oder Gewirr von Metalldrähten, Metallfasern, Metallspänen, Metallpulver oder Mischungen daraus gebildet ist, dessen Porengröße so groß gewählt ist, daß Abgas durch die Umfangswand des Rohres strömen kann.

In überraschender Weise hat sich herausgestellt, daß das erfindungsgemäße Material hohe schalldämmende Wirkung besitzt. Ebenfalls überraschend war, daß das erfindungsgemäße Material neben einer hohen Formfestigkeit auch noch eine Filter- und Katalysatorwirkung besitzt.

Versuche haben in der Praxis gezeigt, daß mit dem erfindungsgemäßen Schalldämmrohr eine sehr gute Schalldämpfung erzielt wird, so daß im allgemeinen auf zusätzliche Schalldämmaßnahmen, wie es bei den Ausführungen nach dem Stande der Technik erforderlich ist, verzichtet werden kann.

Die Herstellung des erfindungsgemäßen Schalldämmrohres ist auf einfachste Weise aus einer Matte möglich, die lediglich in Rohrform gebogen wird. Zur Erzielung der Rohrform aus einer Matte können deren Enden durch Falzen, Schränken, Löten, Schweißen und dergleichen miteinander verbunden werden.

Eine vorteilhafte Weiterbildung der Erfindung, die mit den bekannten Schalldämmrohren nicht erzielbar ist, besteht darin, daß das Gewebe, Gewirk oder Gewirr im Bedarfsfalle zusätzlich noch mit kleineren Partikeln in Form von Spänen, grobem Pulver oder dergleichen versehen werden kann, die - wenn sie aus einem katalytisch wirkendem Material bestehen oder damit beschichtet sind - aufgrund ihrer Eigenschaften eine noch bessere Filter- und/oder Katalysatorwirkung erzielen.

Zur Erhöhung der Wirksamkeit kann das Schalldämmrohr aus mehreren Lagen gebildet sein.

Zur optimalen Anpassung an die jeweiligen Verhältnisse und zur Erhöhung des Wirkungsgrades können dabei im Bedarfsfalle auch die Lagen untereinander unterschiedlich ausgebildet sein. So können z.B. die einzelnen Lagen aus unterschiedlichen Materialien und/oder unterschiedlicher Porengröße und/oder aus unterschiedlichem Sintermaterial bestehen. Auf diese Weise läßt sich auch der Durchgang der Abgase und dessen Druckabfall gezielter steuern.

Die Dicke der Matte und die daraus resultierende Rohrdicke richtet sich nach dem jeweiligen Einsatzfall. Im allgemeinen wird man Rohrdicken zwischen 3 und 15 mm, vorzugsweise zwischen 3 und 6 mm vorsehen.

Die Dicke der Fasern, die damit wesentlich auch die Porosität und damit den Gasdurchgang bestimmt, kann zwischen 0,15 und 1 mm betragen.

Nachfolgend sind anhand der Zeichnung Ausführungsbeispiele der Erfindung prinzipmäßig beschrieben.

Es zeigt:
- Fig. 1: einen Schalldämpfer nach dem Stand der Technik mit mehreren Lochrohren;
- Fig. 2: eine vergrößerte Darstellung eines bekannten Lochrohres;
- Fig. 3: das erfindungsgemäße Schalldämmrohr;
- Fig. 4 und 5: Rohrenden mit zwei verschiedenen Verbindungsarten;
- Fig. 6: eine perspektivische Darstellung einer weiteren Verbindungsart;
- Fig. 7: eine Matte zur Bildung eines Schalldämmrohres.

Grundsätzlich bleibt der Schalldämpfer in seinem Aufbau unverändert, weshalb nachfolgend nur auf das Schalldämmrohr näher eingegangen wird.

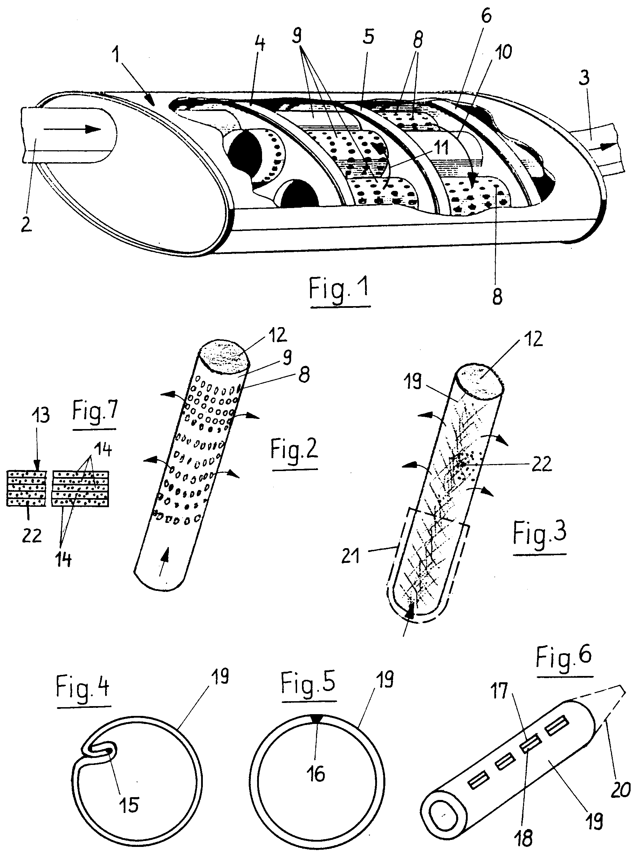

Wie in der Fig. 1 dargestellt, weist ein Schalldämpfer einen Schalldämpfertopf bzw. ein Gehäuse 1 auf, in das auf einer Seite ein Einlaßrohr 2 mündet, während auf der anderen Seite ein Auslaßrohr 3 aus dem Gehäuse 1 herausführt. Das Gehäuse selbst ist durch Trennwände 4, 5 und 6 in verschiedene Zwischenkammern unterteilt. Mehrere nebeneinander angeordnete Lochrohre 9 durchsetzen dabei die Trennwände 4 bzw. 5 bzw. 6. Die Lochrohre 9 besitzen über eine bestimmte Länge ihres Umfanges eine Vielzahl von Löcher 8, wobei die Trennung zwischen gelochtem Abschnitt und ungelochtem Abschnitt so gewählt ist, daß jeweils ein Abschnitt sich vollständig in einer Zwischenkammer befindet. Wie ersichtlich, strömen die Abgase in Pfeilrichtung in das Einlaßrohr 2 ein, treten durch die Löcher 8 des ersten Lochrohres 9 umfangsseitig aus und gelangen entsprechend Pfeil 10 über die Löcher 8 des nächsten Lochrohres 9 in dessen Inneres, wo sie aus der nächsten Zwischenkammer gemäß Pfeil 11 wieder ausströmen und umfangsseitig in das nächste Lochrohr 9 wieder einströmen, wonach das Abgas durch das Auslaßrohr 3 weitergeleitet wird.

Anstelle der in der Fig. 2 dargestellten bekannten Lochrohre 9, die im allgemeinen jeweils an einer Stirnseite durch einen Deckel 12 abgeschlossen sind, werden nun in das Gehäuse 1 Schalldämmrohre 19 gemäß Fig. 3 eingesetzt, die aus einer rechteckigen Matte gebildet sind. Die Matte 13 (siehe Fig. 7) ist aus mehreren einzelnen Lagen 14 gebildet. Jede Lage 14 besteht aus einem Gewebe, Gestrick oder Gewirr von versinterten Metallfasern, die jedoch derart elastisch sind, daß sich die Matte in eine Rohrform biegen läßt. Zur Bildung der Rohrform werden die sich entsprechend gegenüberliegenden Enden der Matte miteinander verbunden. In den Fig. 4 bis 6 sind hierzu prinzipmäßig drei Ausführungsbeispiele dargestellt. Das Gewirr von Fasern kann aus axial verlaufenden Drähten, Spänen und/oder Fasern bestehen, die zur Erhöhung der Stabilität mit Querfasern und/oder Querdrähten durchzogen sind.

Gemäß Fig. 4 werden die beiden Enden durch eine Falzung 15 miteinander verbunden, wobei in bekannter Weise ein umgebogenes Rohrende durch das andere umgebogene Rohrende umschlossen wird.

Gemäß Fig. 5 sind die beiden Enden durch eine Schweißnaht 16 miteinander verbunden.

Gemäß Ausführungsbeispiel nach der Fig. 6 ist ein Ende mit einer Vielzahl von sich über die Rohrlänge erstreckende Schlitze 17 versehen, durch die am anderen Ende angeordnete Lappen 8 gesteckt und entsprechend umgebogen sind.

Wie in der Fig. 3 dargestellt, kann das Schalldämmrohr 19 auf der der Einführungsseite oder - je nach Strömungsrichtung - auf der der Ausgangsseite gegenüberliegenden Seite durch einen Deckel 12 wenigstens annähernd gasdicht abgeschlossen sein.

Statt dessen kann - wie in der Fig. 6 dargestellt - ein Rohrende auch durch eine Verquetschung 20 wenigstens annähernd gasdicht abgeschlossen werden.

Die Durchströmung des Schalldämmrohres erfolgt in gleicher Weise wie nach dem Stande der Technik in Abhängigkeit von dessen Lage in dem Schalldämpfer von innen nach außen (wie in der Fig. 3 dargestellt) oder von außen nach innen.

Um einen weitgehend gasdichten Umfangsabschnitt zu erreichen, wie es durch den Einbau nach dem Stand der Technik entsprechend dem unperforierten Teil der Rohre 9 erforderlich ist, können die Schalldämmrohre 19 - wie in der Fig. 3 gestrichelt dargestellt - mit einem entsprechenden gasdichten Schutzüberzug 21 versehen sein. Durch den gasdichten Schutzüberzug 21 wird ein Abschluß zu der benachbarten Kammer erreicht, damit die gewünschte Strömung durch die einzelnen Zwischenkammern erfolgt.

Selbstverständlich kann ein gasdichter Abschnitt der Umfangswand auch durch eine entsprechende Ausgestaltung des Schalldämmrohres 19 selbst gebildet werden. Hierzu ist es lediglich erforderlich, das Gewebe, Gestrick oder Gewirr in diesem Bereich derart dicht, bzw. komprimiert auszubilden, daß eine wenigstens annähernde Gasdichtheit gewährleistet ist. In diesem Falle kann ein gesonderter Schutzüberzug 21 entfallen, was eine weitere Vereinfachung und damit Verbilligung darstellt.

Als Materialien für das Gewebe, Gestrick oder Gewirr wird hochhitzebeständiges Material verwendet, das folgende Zusammensetzungen besitzen kann:
1. Werkstoffe einer intermetallischen (intensive Mischung) Phase, wie Ni₃Al, NiAl, Ti₃Al, TiAl, Mg₂Si, Al₃Mg, MnZr₂, Ti₅Si₃.
2. Stähle mit einem 17-26 % Cr, Ni 3-37 %, Si 0,7-2,5 %; C < 0,1 %; Mn 1-2 %, P ≦ 0,03 %; S ≦ 0,02 %, Al 0,7-6 % Gehalt.
3. Stähle:
   a) 18,5 % Cr; 9,5 % Ni, N 0,15 %, Si 1,3 %, C < 0,06 %, und geringe Mengen von seltenen Erdmetallen, vorwiegend Cerium.
   b) 21% Cr, 11% Ni, 1,7% Si, C < 0,1%, N 0,17% und seltene Erdmetalle, vorwiegend Cerium.
   c) 25 % Cr; 35 % Ni, 1,5 % Si < 0,05 % und seltene Erdmetalle, vorwiegend Cerium.

Durch die vorstehend genannten Zusätze läßt sich die Filter- und Katalysatorwirkung noch verbessern.

Versuche in der Praxis haben gezeigt, daß auch bei Verwendung nur eines Grundwerkstoffes in Form eines hitzebeständigen Stahles bereits eine deutliche Umwandlung von Kohlenmonoxyd in Kohlendioxyd erfolgt und der Anteil von Kohlenwasserstoffen deutlich verringert wird. Auch eine Rußabscheidung bei einem Einsatz für einen Dieselmotor ist möglich. Durch eine entsprechende Beschichtung bzw. Zugabe von katalytisch wirkenden Partikeln 22 in Form von Spänen, Drahtbruchstücken oder Pulver zu dem Gewebe, Gestrick oder Gewirr, lassen sich die vorstehend genannten Wirkungen noch weiter verbessern. Die Partikel 22 können vor dem Sintern in die Formteile eingebracht werden und anschließend gemeinsam bzw. mit einem Gewebe, Gestrick oder Gewirr gesintert werden.

Als katalytisch wirkende Werkstoffe für die Partikel 22 sind folgende Zusammensetzungen bzw. Materialien geeignet:
1. Materialien analog dem Grundmaterial.
2. Leichtmetalloxyde wie AlₓO_{y}, SiₓO_{y}: z.B Al₂O₃, SiO₂, oder SiTiO₃, AlTiO₅, SiO₂, ZrO₂, SiSiC, TiO₂, BaTiO₃, Si₃N₄, Cr₂O₃.

Die vorgenannten Materialien können einzeln oder in Mischungen verwendet werden. Zusätzlich können noch Kohlenstoffasern und/oder Kohlenstoffpartikel beigemischt oder auch alleine verwendet werden.

Die Verwendung von Aluminium hat den Vorteil, daß sich dieses an der Oberfläche abscheidet und dort eine sehr korrosionsfeste Schicht bildet. Weiterhin hat sich herausgestellt, daß es ein gutes "Verankerungsmittel" für eine zusätzliche Schicht bilden kann, wie z.B. bei einer zusätzlichen Aufbringung von Teilchen in einem Tauchbad.

Weiterhin können die Dotierungspartikel auch als Einlagen von katalytischen Materialien, wie z.B. die Leichtmetalloxyde, dienen.

## Patentansprüche

1. Schalldämpfer für die Abgase eines Verbrennungsmotores mit wenigstens einem in einem Gehäuse angeordneten Schalldämmrohr, durch dessen Umfangswand die Abgase strömen,
**dadurch gekennzeichnet,** daß das Schalldämmrohr (19) aus einem versinterten Gewebe, Gestrick oder Gewirr von Metalldrähten, Metallfasern, Metallspänen, Metallpulver oder Mischungen daraus gebildet ist, dessen Porengröße so groß gewählt ist, daß Abgas durch die Umfangswand des Rohres (19) strömen kann.

2. Schalldämpfer nach Anspruch 1,
**dadurch gekennzeichnet,** daß das Schalldämmrohr (19) aus einer Matte (13) gebildet ist, die in Rohrform gebogen ist.

3. Schalldämpfer nach Anspruch 2,
**dadurch gekennzeichnet,** daß die Rohrform aus der Matte (13) durch Falzen oder Schränken gebildet ist.

4. Schalldämpfer nach Anspruch 2,
**dadurch gekennzeichnet,** daß die Rohrform aus dem Mantel durch Löten oder Schweißen gebildet ist.

5. Schalldämpfer nach einem der Ansprüche 1 bis 4,
**dadurch gekennzeichnet,** daß in das Schalldämmrohr (19) Partikel (22) in Form von Spänen, Drahtbruchstücken oder Pulver mit Filter- und/oder Katalysatoreigenschaften eingebracht sind.

6. Schalldämpfer nach einem der Ansprüche 1 bis 5,
**dadurch gekennzeichnet,** daß das Schalldämmrohr (19) aus mehreren Lagen (14) gebildet ist.

7. Schalldämpfer nach einem der Ansprüche 1 bis 6,
**dadurch gekennzeichnet,** daß die Dicke der Fasern zwischen 0,15 und 1 mm beträgt.

8. Schalldämpfer nach einem der Ansprüche 1 bis 7,
**dadurch gekennzeichnet,** daß das Schalldämmrohr (19) an einem Ende einen wenigstens annähernd gasdichten Abschluß durch einen Abschlußdeckel (12) oder eine Verquetschung (20) des Rohrendes aufweist.

9. Schalldämpfer nach einem der Ansprüche 1 bis 8,
**dadurch gekennzeichnet,** daß das Material für den Katalysatorkörper Werkstoffe einer intermetallischen (intensive Mischung) Phase wie Ni₃Al, NiAl, Ti₃Al, TiAl, Mg₂Si, Al₃Mg, MnZr₂, Ti₅Si₃ aufweist.

10. Schalldämpfer nach einem der Ansprüche 1 bis 8,
**dadurch gekennzeichnet,** daß das Material für den Katalysatorkörper Stähle mit 17-26 % Cr, Ni 3-37 %, Si 0,7-2,5 %; C < 0,1 %; Mn 1-2 %, P ≦ 0,03 %; S ≦ 0,02 %, Al 0,7-6 % Gehalt aufweist.

11. Schalldämpfer nach einem der Ansprüche 1 bis 8,
**dadurch gekennzeichnet,** daß das Material für den Katalysatorkörper Stähle mit 18,5 % Cr, 9,5 % Ni, N 0,15 %, Si 1,3 %, C < 0,06 %, und geringe Mengen von seltenen Erdmetallen, vorwiegend Cerium aufweist.

12. Schalldämpfer nach einem der Ansprüche 1 bis 8,
**dadurch gekennzeichnet,** daß das Material für den Katalysatorkörper Stähle mit 21 % Cr, 11 % Ni, 1,7 % Si, C < 0,1 %, N 0,17 % und seltene Erdmetalle, vorwiegend Cerium aufweist.

13. Schalldämpfer nach einem der Ansprüche 1 bis 8,
**dadurch gekennzeichnet,** daß das Material für den Katalysatorkörper Stähle mit 25 % Cr; 35 % Ni, 1,5 % Si < 0,05 % C und seltene Erdmetalle, vorwiegend Cerium aufweist.

14. Verfahren zur Herstellung eines Schalldämpfers für die Abgase eines Verbrennungsmotores nach einem der Ansprüche 1 bis 13,
**dadurch gekennzeichnet,** daß eine Matte (13) aus einem versinterten Gewebe, Gestrick oder Gewirr von Metalldrähten, Metallfasern, Metallspänen, Metallpulver oder Mischungen daraus in Form eines Rohres gebogen wird.

15. Verfahren nach Anspruch 14,
**dadurch gekennzeichnet,** daß mehrere Lagen (14) eines Gewebes, Gestrickes oder Gewirres in Rohrform gebogen werden.

16. Verfahren nach Anspruch 14 oder 15,
**dadurch gekennzeichnet,** daß das Gewebe, Gestrick oder Gewirr mit Partikeln (22) in Form von Spänen, Drahtbruchstücken oder Pulver mit Filter- und/oder Katalysatoreigenschaften dotiert wird.

17. Verfahren nach Anspruch 16,
**dadurch gekennzeichnet,** daß als Dotierungspartikel Metalle, Metalloxyde, Keramik, Kunststoffe oder eine Mischung daraus vorgesehen ist.

18. Verfahren nach Anspruch 16,
**dadurch gekennzeichnet,** daß katalytisch wirkende Partikel, wie Cr, V, Mo, Mn, Pt, Rh, Pd, Ti, Si jeweils einzeln oder in Mischung vorgesehen sind.

19. Verfahren nach Anspruch 16,
**dadurch gekennzeichnet,** daß Al₂O₃, SiTiO₃, AlTiO₅, SiO₂, ZrO₂. SiSiC, TiO₂, BaTiO₃, Si₃N₄, Cr₂O₃ jeweils einzeln oder in Mischung vorgesehen sind.

20. Verfahren nach Anspruch 16,
**dadurch gekennzeichnet,** daß als Dotierungspartikel Kohlenstoffasern und/oder Kohlenstoffpartikel alleine oder in Mischung zugegeben sind.
